# FASCICULE DE BREVET EUROPEEN

(11) **EP 2 585 625 B1**
(45) Date de publication et mention de la délivrance du brevet: **16.04.2014**
(21) Numéro de dépôt: 11740957.3
(22) Date de dépôt: 23.06.2011
(51) Int. Cl.: C25C 3/16, C25C 7/00

(54) **DISPOSITIF EXTRACTEUR DE CALES DE COURT-CIRCUITAGE DESTINE A LA MISE EN CIRCUIT D'UNE CELLULE D'ELECTROLYSE POUR LA PRODUCTION D'ALUMINIUM**
VORRICHTUNG ZUR ENTNAHME VON KURZSCHLIESSUNGSDISTANZSCHEIBEN FÜR DIE INBETRIEBNAHME EINER ELEKTROLYSEZELLE ZUR HERSTELLUNG VON ALUMINIUM
SHORT-CIRCUITING-SHIM-EXTRACTING DEVICE FOR SWITCHING ON AN ELECTROLYTIC CELL FOR PRODUCING ALUMINUM

(30) Priorité: 28.06.2010 FR 1002688
(43) Date de publication de la demande: 01.05.2013
(73) Titulaire: E.C.L., 59790 Ronchin (FR); Rio Tinto Alcan International Limited, Montréal, QC H3A 3G2 (CA)
(72) Inventeur: GUERIN, Jérôme, F-59130 Lambersart (FR); ROSE, Alain, F-59134 Beaucamps Ligny (FR); BRUN, Frédéric, F-73300 Saint Jean de Maurienne (FR); DESPINASSE, Serge, F-73300 Fontcouverte-la Toussuire (FR)
(74) Mandataire: Malcoiffe, Julien
(86) Numéro de dépôt international: PCT/FR2011/000358
(87) Numéro de publication internationale: WO 2012/001243

(56) Documents cités:
- EP-A1- 2 080 820
- CN-Y- 201 010 699
- US-A- 4 431 492

## Description

L'invention relève du domaine de la production d'aluminium par électrolyse ignée selon le procédé de Hall-Héroult. Elle concerne les dispositifs de connexion électrique des cellules d'électrolyse pour la production d'aluminium par électrolyse ignée. Elle concerne plus particulièrement un équipement, qui est employé lors de l'opération de mise en circuit d'une cellule mise temporairement hors service, opération appelée également « redémarrage», et qui permet d'enlever des cales de court-circuitage placées entre l'ensemble cathodique de ladite cellule et l'ensemble cathodique de la cellule amont adjacente. Un tel équipement sera appelé par la suite "dispositif d'extraction de cale" ou encore "extracteur".

L'aluminium est produit industriellement par électrolyse ignée, selon le procédé bien connu de Hall-Héroult, dans des cellules d'électrolyse. Les usines contiennent un grand nombre de cellules d'électrolyse disposées en ligne, dans des bâtiments appelés halls ou salles d'électrolyse, et raccordées électriquement en série à l'aide de conducteurs de liaison, de façon à optimiser l'occupation au sol des usines. Chaque cellule d'électrolyse comporte une cuve munie d'un ensemble cathodique et d'un système anodique. La cuve comporte un caisson en acier, des éléments de revêtement en matériaux réfractaires et un ensemble cathodique situé au fond de la cuve, formé par la juxtaposition de blocs carbonés dans lesquels sont scellées des barres métalliques dont les extrémités sortent du caisson. Chaque cuve comporte également un système anodique formé par au moins une poutre rigide, qui supporte une ou plusieurs barres horizontales conductrices, appelées "cadre anodique", sur lesquelles sont assujetties les tiges de suspension d'anodes en matériau carboné qui sont partiellement immergées dans le bain d'électrolyte.

Les cellules sont généralement disposées de manière à former deux ou plusieurs files parallèles qui sont électriquement liées entre elles par des conducteurs d'extrémité. Conventionnellement, le courant électrique passe de la cathode d'une cellule amont vers l'anode d'une cellule en aval. Le circuit de connexion entre deux cellules successives comprend un circuit de transport du courant d'électrolyse, constitué par des collecteurs cathodiques reliés d'une part aux sorties cathodiques d'une cellule de rang donné (n) et, d'autre part, à des "montées anodiques", elles-mêmes reliées à la poutre rigide et aux cadres anodiques de la cellule avale adjacente, de rang (n+1).

De temps en temps, une ou plusieurs cellules d'une série doivent être mises à l'arrêt. On effectue cet arrêt en connectant le collecteur cathodique d'une cellule donnée au conducteur de liaison qui relie les sorties cathodiques de la cellule amont adjacente aux "montées anodiques" qui alimentent le cadre anodique de ladite cellule. La connexion se fait par l'intermédiaire d'une pluralité de cales conductrices, typiquement en aluminium, telles que celles évoquées dans le brevet FR 2 583 069 (voir figure 8, élément référencé 12): dans une telle configuration, le collecteur cathodique de la cellule et le conducteur de liaison entre la cathode de la cellule amont et l'anode de ladite cellule se présentent localement sous la forme de deux conducteurs à section sensiblement rectangulaire, qui ont chacun au moins une face supérieure horizontale et une face sensiblement verticale, la face sensiblement verticale d'un conducteur étant placée en vis-à-vis de celle de l'autre, les deux faces sensiblement verticales délimitant ainsi un entrefer destiné à recevoir une cale de court-circuitage, elle-même comprenant deux faces sensiblement parallèles, qui convergent faiblement vers le bas lorsque la cale est placée en vue d'occuper ledit entrefer.

En vue de l'arrêt de la cellule, les cales doivent être insérées entre les conducteurs de façon à offrir une surface de contact offrant une résistance électrique aussi faible que possible. Dans la pratique, pour assurer un bon contact électrique, ces cales sont introduites dans l'entrefer compris entre les conducteurs, alors qu'eux-mêmes sont retenus par des tirants boulonnés.

Pour la mise en circuit de la cellule, lesdites cales doivent être retirées, de façon à isoler l'un de l'autre lesdits conducteurs, le courant provenant de la cellule amont passant à nouveau à travers les montées anodiques pour alimenter le cadre anodique de la cellule avale adjacente. Pour enlever les cales sans avoir à fournir des efforts trop importants, il est en général nécessaire de déboulonner au moins partiellement lesdits tirants. Les cales sont ensuite tirées vers le haut de façon à ce qu'elles sortent de l'entrefer ménagé entre les conducteurs.

La mise en place et l'enlèvement de ces cales ont nécessité jusqu'à présent des interventions humaines délicates, impliquant soit l'arrêt de la série pendant le temps nécessaire pour l'intervention, ce qui dégrade le rendement de la série, soit, de préférence, une intervention de durée très limitée. En effet, si le retrait s'effectue sans que la série soit arrêtée, l'enlèvement de l'ensemble des cales ne pouvant pas se faire instantanément, l'intensité du courant qui passe dans les cales restées en place augmente progressivement, ce qui échauffe celles-ci de façon notable, de sorte que les dernières cales enlevées peuvent atteindre des températures élevées. Une température élevée des cales peut avoir des conséquences néfastes, comme nécessiter un effort d'extraction plus élevé en raison de leur dilatation, ou encore entraîner une dégradation importante des surfaces de contact. L'intervention doit donc être aussi courte que possible pour limiter l'échauffement des dernières cales enlevées.

De plus, les contraintes de sécurité imposent que les opérateurs restent au niveau du sol, en particulier quand ils interviennent sur lesdites cales. Autour des cellules d'électrolyse actuelles, on aménage des passages destinés à faciliter diverses interventions sur la cellule. Ces passages sont approximativement au même niveau que la surface du bain. Pour des raisons impératives de sécurité, les collecteurs cathodiques et les conducteurs de liaison sont situés en-dessous de ces passages. Les conducteurs et les entrefers destinés à recevoir les cales sont donc disposés en-dessous de ces passages mais ils doivent être accessibles à partir de ces passages, lors des opérations nécessaires à l'arrêt momentané de la cellule ou à sa mise en circuit.

Pour gagner du temps au cours de ces opérations, on a cherché à enlever les cales à l'aide d'un palan placé sur un pont roulant circulant dans le hall d'électrolyse, au-dessus des cellules. Pour ce faire, on a utilisé des cales de court-circuitage munies de tourillons et le palan était muni d'une élingue en U destinée à être accrochée aux tourillons de la cale. Le palan permettait de développer des efforts importants, typiquement, de l'ordre de 10 tonnes, mais ceux-ci restaient insuffisants si les tirants n'étaient pas, au moins partiellement, préalablement déboulonnés. Ceci entraînait une perte de temps importante car le déboulonnage des tirants ne pouvait se faire que du niveau du sol, avec un outil à long manche dont les possibilités de rotation étaient faibles. De plus, lorsque, malgré l'effort transmis, la cale adhérait toujours aux conducteurs, le palan finissait par soulever, entraîner et endommager les conducteurs. Enfin, une telle pratique soulevait des problèmes importants de sécurité, car les cales, qui ont une certaine masse, typiquement quelques dizaines de kilogrammes, étaient expulsées en suivant une trajectoire plus ou moins contrôlée, orientée vers le haut et susceptible de passer à proximité des opérateurs.

La demanderesse a mis au point un procédé d'extraction des cales qui ne présente pas les inconvénients cités plus haut, dans lequel on utilise un extracteur qui agit sur les cales sans qu'il y ait besoin de déboulonner les tirants, qui exerce un effort important lors de l'extraction des cales sans que cela entraîne le moindre risque de détérioration desdits conducteurs et enfin qui permet de maîtriser la trajectoire d'éjection desdites cales.

Un premier objet selon l'invention est un dispositif extracteur destiné à extraire une cale de court-circuitage, ladite cale ayant été insérée entre deux conducteurs pour la mise hors circuit d'une cellule d'électrolyse, chaque conducteur présentant au moins une face horizontale supérieure et une face sensiblement verticale, la face sensiblement verticale d'un conducteur étant placée en vis-à-vis de celle de l'autre, les deux faces sensiblement verticales délimitant ainsi un entrefer destiné à recevoir ladite cale de court-circuitage, elle-même comprenant deux faces sensiblement parallèles, qui convergent faiblement vers le bas lorsque ladite cale est placée en vue d'occuper ledit entrefer, ledit dispositif comprenant un moyen de préhension de ladite cale et étant caractérisé en ce qu'il comprend, associé à la face horizontale supérieure de chaque conducteur, au moins un vérin orienté verticalement comprenant un corps et un piston associé à une tige de piston,
a) ladite tige (ou ledit corps) présentant au moins une face d'appui horizontale orientée vers le bas et disposée de telle sorte que, lorsque ledit dispositif extracteur est placé au dessus de ladite cale pour l'extraire, ladite face horizontale supérieure du conducteur se trouve au droit de ladite face d'appui horizontale,
b) ledit corps (ou ladite tige) étant relié audit moyen de préhension de ladite cale, de telle sorte que, lorsque ledit vérin est actionné pour effectuer l'extraction de la cale, ledit vérin exerce, sur lesdits conducteurs et sur ladite cale, des efforts opposés tendant à les écarter.

En utilisant le dispositif d'extraction de cale selon l'invention, on peut effectuer la mise en circuit d'une cellule d'électrolyse en isolant l'un de l'autre, sans les détériorer, les conducteurs associés aux éléments cathodiques de deux cellules adjacentes: l'effort compensant la force qui tend à séparer la cale du conducteur est la résultante d'efforts qui s'exercent directement sur la face horizontale supérieure de chacun des conducteurs , ce qui permet d'éviter le soulèvement des conducteurs et leur endommagement, au cas où l'effort d'extraction serait insuffisant pour détacher la cale des conducteurs. Ce dispositif, susceptible de fournir des efforts supérieurs à ceux de l'art antérieur tout en n'endommageant pas les conducteurs, est d'autant plus approprié que la cale est maintenue fortement entre deux conducteurs retenus par des tirants.

Comme indiqué précédemment, les deux conducteurs en vis-à-vis sont :
- un premier conducteur, qui est un conducteur de liaison entre la sortie cathodique de la cellule directement en amont et la montée anodique qui alimente le cadre anodique de ladite cellule,
- un deuxième conducteur, qui est un élément de collecteur cathodique de ladite cellule.

Le dispositif extracteur selon l'invention comprend au moins un vérin que l'on place de telle sorte qu'il puisse, lorsqu'il est actionné, exercer des efforts opposés sur la cale et sur un conducteur. Chacune des deux parties du vérin, qui sont mobiles l'une par rapport à l'autre (corps et tige), peut être associée soit à la cale, soit au conducteur. La première partie du vérin (le corps ou la tige) est solidaire d'au moins une face d'appui horizontale destinée à arriver au droit de la face horizontale supérieure d'un conducteur. La deuxième partie du vérin (la tige ou le corps) est reliée au moyen de préhension de la cale, au moins temporairement, lorsque le vérin est actionné pour effectuer l'extraction de la cale. En d'autres termes, cette deuxième partie du vérin peut être mobile par rapport audit moyen de préhension dans certaines phases d'utilisation du dispositif extracteur mais il est nécessaire qu'elle arrive au contact de ce moyen de préhension et l'entraîne dans son mouvement, lorsque le vérin est actionné en vue d'exercer les efforts d'écartement.

Le moyen de préhension de la cale comprend avantageusement une pièce d'accrochage sur laquelle sont fixés des moyens d'accrochage coopérant avec des moyens d'accrochage complémentaires ménagés sur la cale, de préférence sur la partie haute de la cale qui est prévue pour rester au-dessus de l'entrefer des conducteurs lorsque la cale y est insérée et qui est donc plus facilement accessible. Par exemple, on aménage dans la partie haute de la cale au moins un alésage sensiblement horizontal destiné à être traversé par un axe de verrouillage solidaire de la pièce d'accrochage. Le ou les axes de verrouillage sont actionnés par un ou plusieurs actionneurs auxiliaires, qui sont eux-mêmes fixés sur ladite pièce d'accrochage et qui imposent aux dits axes un mouvement tel qu'ils peuvent s'emboîter dans lesdits alésages en vue de la préhension de la cale.

Avantageusement, le diamètre de l'axe de verrouillage est aussi proche que possible de celui de l'alésage auquel il est associé et, pour une meilleure répartition des efforts, l'axe de verrouillage passe également à travers les alésages de deux pattes solidaires dudit moyen d'accrochage, placées de telle sorte qu'en position d'accrochage, lesdites pattes sont situées de part et d'autre de ladite cale. Pour faciliter l'introduction de l'axe de verrouillage, on peut également choisir un diamètre significativement plus faible que celui de l'alésage, tout en ménageant sur ledit axe de verrouillage, au niveau de la zone destinée à entrer en contact avec l'alésage, une portion de surface dont le rayon de courbure est plus grand, voisin du rayon de l'alésage.

Dans la pratique, les conducteurs sont placés en vis-à-vis de sorte que la cale est placée verticalement et l'extracteur peut ainsi être mis en place au niveau de la cale à extraire à l'aide d'un dispositif de transport et de levage, de type pont roulant/chariot/palan. Mais l'invention conserve tout son intérêt si le couple des directions horizontale et verticale évoquées est remplacé par tout couple de directions perpendiculaires, chaque cale devant présenter une face supérieure sensiblement perpendiculaire à la direction de l'effort qui doit être appliqué pour les séparer, lequel doit être sensiblement parallèle aux faces en vis-à-vis des conducteurs. Ceci suppose bien entendu que le dispositif de manutention destiné à placer ledit dispositif au droit des cales est adapté à un tel référentiel.

Le dispositif extracteur selon l'invention comprend au moins deux vérins ayant les caractéristiques précisées ci-dessus, chaque conducteur étant associé à au moins un vérin. Ces vérins peuvent être des vérins électriques, typiquement alimentés par un circuit possédant un variateur, mais, de préférence, il s'agit de vérins hydrauliques, car ces derniers, à encombrement identique, sont aptes à exercer un effort plus important. Avantageusement, les vérins hydrauliques sont alimentés par une même centrale hydraulique, qui est de préférence montée sur ledit dispositif extracteur ou sur le dispositif de manutention dudit dispositif extracteur.

Selon l'invention, la tige (ou le corps) des dits vérins est solidaire d'au moins une face d'appui horizontale orientée vers le bas et disposée de telle sorte que, lorsque ledit dispositif extracteur est placé au dessus de ladite cale pour l'extraire, ladite face d'appui horizontale arrive en vis-à-vis de la face horizontale supérieure du conducteur et est amenée à entrer en contact direct avec ladite face horizontale supérieure. La tige (ou le corps) peut être directement munie de ladite face d'appui horizontale. Avantageusement, la face d'extrémité de la tige (ou la face inférieure du corps) est recouverte d'un patin qui présente ladite face d'appui horizontale, ledit patin étant en une matière qui est résistante électriquement et apte à résister mécaniquement aux efforts transmis. De la sorte, ledit patin permet d'assurer l'isolement électrique du dispositif extracteur par rapport aux conducteurs.

Les vérins sont placés ainsi à proximité des conducteurs et exercent leurs efforts directement sur les faces horizontales supérieures des dits conducteurs, sans qu'il y ait besoin d'intercaler une ou plusieurs pièces intermédiaires entre les vérins et les conducteurs. Il s'en suit que le dispositif extracteur est un dispositif compact, léger, facile à manier et rapide à positionner au-dessus des conducteurs, au droit des cales à enlever. Le dispositif extracteur selon l'invention permet de réaliser l'opération d'extraction plus rapidement que dans l'art antérieur, de sorte qu'il est possible de limiter de façon beaucoup plus efficace l'échauffement des dernières cales lors de la mise en circuit d'une cellule d'électrolyse.

D'autre part, le fait de présenter au moins un vérin au droit de chaque conducteur rend le dispositif extracteur selon l'invention plus souple et plus sûr d'utilisation. On peut ainsi positionner au moins un vérin en face de chaque conducteur, et actionner chacun de ces vérins de façon à rattraper la différence de niveaux qui peut exister entre les faces horizontales supérieures des conducteurs. Avantageusement, les vérins sont tous alimentés par le même circuit hydraulique et ceux-ci avancent avec la même vitesse mais sur une course plus ou moins longue en fonction de l'altitude de la face horizontale supérieure du conducteur à laquelle chacun d'entre eux est associé, ce qui leur permet de se positionner automatiquement à la bonne hauteur. De la sorte, le dispositif extracteur peut rester bien positionné et exercer son effort d'extraction dans une direction sensiblement verticale. Au contraire, avec un vérin solidaire d'une seule face d'appui (ou de deux faces d'appui solidaires l'une de l'autre) qui vient en appui sur les deux conducteurs, on risque, en cas de différence de niveaux importante entre lesdites faces horizontales supérieures, d'avoir un dispositif non correctement positionné susceptible d'exercer un effort dans une direction éloignée de la verticale, ce qui augmente le risque d'évacuation des cales selon une trajectoire oblique mal maîtrisée. Il s'en suit que le dispositif extracteur selon l'invention permet une extraction de cale mécaniquement stable et peu dangereuse, la trajectoire d'évacuation des cales étant parfaitement maîtrisée.

Le rattrapage des différences de niveaux se fait avantageusement en aménageant le circuit hydraulique qui alimente lesdits vérins. Avec un circuit correspondant à un système connu sous le nom de « hydraulic pressure booster », comprenant un groupe basse pression et un multiplicateur de pression, on peut avec une puissance embarquée faible, effectuer un rattrape rapide des jeux, les vérins fonctionnant en basse pression et à haut débit puis, lorsque les jeux sont rattrapés, réaliser l'extraction de la cale en exerçant l'effort d'extraction nécessaire, l'ensemble des vérins fonctionnant ensemble sous haute pression, à faible débit.

On peut également aménager un circuit hydraulique qui ne fait pas appel au système dit « hydraulic pressure booster ». Par exemple, on peut faire appel à une pompe double Basse Pression / Haute Pression, dont le principe est largement utilisé sur les applications où l'on n'a pas besoin simultanément de la pleine pression et du débit maximal. Le circuit est tel que, lors du travail en basse pression, les deux débits de pompe sont cumulés pour fournir la vitesse maximale au récepteur. Dès que le vérin rencontre un obstacle, la résistance génère une pression correspondant au tarage d'une valve appelée « conjoncteur-disjoncteur », celle-ci s'ouvre et met le débit de la pompe basse pression au retour. Un clapet anti-retour placé en aval du conjoncteur-disjoncteur isole les deux circuits et seule la pompe haute pression débite vers le récepteur. La haute pression est sécurisée par un limiteur de pression. En cas de chute de pression après la montée en pression et dès que celle-ci arrive au niveau du tarage de la valve dite « conjoncteur-disjoncteur », celle-ci s'ouvre et les deux débits sont de nouveau disponibles en basse pression. Un tel circuit permet d'avoir une pleine puissance disponible à tout instant a l'avantage de faire appel à du matériel courant, fonctionnant sur un schéma éprouvé et simple. De plus, le seuil de disjonction est réglable pour optimiser la puissance. Cependant, le niveau de puissance installée nécessaire au bon fonctionnement du dispositif est plus important que dans la solution précédente. Enfin, on pourrait également, au lieu d'associer un groupe basse pression et un multiplicateur de pression (« hydraulic pressure booster »), associer une mini-centrale hydraulique haute pression et un accumulateur.

Avantageusement, ledit dispositif extracteur selon l'invention est muni de deux couples de vérins, chaque couple étant associé à un conducteur. Une telle disposition, présentée dans l'exemple ci-après, permet le passage d'un axe de verrouillage latéral entre deux vérins (système plus compact, meilleure répartition des efforts).

Dans un mode préféré de l'invention, ledit dispositif extracteur comprend également un actionneur destiné à relever l'ensemble comprenant la cale, le moyen de préhension de la cale et le ou les vérins, dès que la cale a été extraite, c'est-à-dire dès qu'elle n'est plus retenue par les conducteurs. Cet actionneur joue le rôle d'éjecteur : l'ensemble comprenant la cale, le moyen de préhension de la cale et le(s)vérin(s) doit être évacué de telle sorte que la cale puisse sortir complètement de l'entrefer compris entre les conducteurs en vis-à-vis aussi vite que possible, à une vitesse significativement supérieure à celle de la tige d'un vérin hydraulique. On recherche en effet pour l'ensemble comprenant la cale, le moyen de préhension de la cale et le(s)vérin(s) une vitesse d'éjection aussi élevée que possible car cela permet de limiter le risque d'apparition d'arc électrique au cours de la remontée de la cale.

Avantageusement, ledit actionneur est un vérin pneumatique. Pour les distinguer de ce vérin auxiliaire agissant en tant qu'éjecteur, le ou lesdits vérins sont appelés "vérins d'appui". Avantageusement, le moyen de préhension de la cale est solidaire de la tige (ou du corps) dudit actionneur et la course de la tige dudit actionneur est suffisamment longue pour permettre à ladite cale de sortir complètement de l'entrefer des conducteurs.

Dans un mode de réalisation préféré, les vérins d'appui et l'actionneur fonctionnent simultanément. Il n'y a alors pas besoin de synchroniser les actions des vérins d'appui et l'actionneur : l'effort d'extraction exercé sur la cale, fourni par le ou les vérins d'appui, étant substantiellement plus élevé que l'effort fourni par l'actionneur, n'est appliqué que jusqu'au moment où la cale se détache des conducteurs, moment à partir duquel seul l'effort de soulèvement de l'actionneur agit.

Avantageusement, ledit dispositif extracteur comprend un bâti sur lequel est fixé ledit actionneur. Ledit bâti comprend des moyens d'accrochage, de façon à ce qu'il puisse être manutentionné par un moyen de transport et de levage. Typiquement, le moyen utilisé pour le transport et le levage dudit dispositif extracteur est une association pont roulant/chariot/palan. Pour effectuer une extraction de cale, on place, à l'aide dudit moyen de transport et de levage, le dispositif au droit des conducteurs et on le pose, de telle sorte la face d'appui horizontale de chaque vérin repose sur une face horizontale supérieure du conducteur associé audit vérin. Au cours de l'extraction, le dispositif extracteur peut être maintenu ou non par le moyen de transport et de levage.

Avantageusement, ledit bâti est muni de moyens de centrage qui permettent de guider ledit dispositif extracteur au cours de sa descente verticale vers une position prédéfinie par rapport auxdits conducteurs, les faces d'appui étant placées au droit des faces horizontales supérieures desdits conducteurs.

Avantageusement, ledit bâti comprend également un carénage qui délimite l'espace dans lequel l'ensemble comprenant la cale et le moyen de préhension de la cale doit évoluer après l'extraction de ladite cale et qui assure une protection des opérateurs agissant à proximité de l'extracteur vis-à-vis des pièces mobiles extraites.

Avantageusement, ledit dispositif extracteur est également muni d'un moyen de guidage sensiblement vertical, qui permet de guider ledit moyen de préhension de la cale au cours de la remontée de l'ensemble extrait (cale, moyen de préhension de la cale, vérin(s)), ce qui permet de maîtriser sa trajectoire au cours de son éjection, en particulier lorsque la cale se trouve encore au niveau de l'entrefer entre les conducteurs: on évite ainsi que la cale revienne au contact des conducteurs et on limite le risque d'apparition d'arc électrique.

Avantageusement, ledit dispositif est également muni d'une boîte de refroidissement, qui est posée au dessus de la cale et qui est équipée en son sommet d'un dispositif de refroidissement agissant par effet venturi, le débit d'air ainsi généré étant orienté vers ladite cale.

Le dispositif extracteur, tel que décrit auparavant, est destiné à être utilisé pour extraire une seule cale. Il est bien entendu que les principes énoncés ci-dessus peuvent s'appliquer à un dispositif extracteur permettant d'extraire plusieurs cales simultanément, ce dernier devenant inévitablement plus lourd, plus encombrant et plus lent à manipuler, mais permettant également d'éviter l'échauffement puisque plusieurs cales peuvent être enlevées en même temps.

Un autre objet selon l'invention est un procédé d'extraction de cales de court-circuitage employé lors de l'opération de redémarrage d'une cellule d'électrolyse mise temporairement hors service consistant à enlever les cales de court-circuitage qui ont été introduites entre deux conducteurs pour la mise hors circuit de ladite cellule d'électrolyse, le premier conducteur étant associé à l'ensemble cathodique de ladite cellule et le deuxième conducteur étant associé à l'ensemble cathodique de la cellule amont adjacente, chaque conducteur présentant au moins une face horizontale supérieure et une face sensiblement verticale, la face sensiblement verticale d'un conducteur étant placée en vis-à-vis de celle de l'autre, les deux faces sensiblement verticales délimitant ainsi un entrefer destiné à recevoir ladite cale de court-circuitage, elle-même comprenant deux faces sensiblement parallèles, qui convergent faiblement vers le bas lorsque ladite cale est placée en vue d'occuper ledit entrefer, ledit procédé étant caractérisé en ce que l'on utilise le dispositif selon l'invention pour extraire ladite cale.

Avantageusement, l'intervention devant être la plus rapide possible pour limiter l'échauffement des dernières cales enlevées, on utilise plusieurs dispositifs selon l'invention pour extraire simultanément tout ou partie des cales qui ont été mises en place pour la mise hors circuit d'une cellule d'électrolyse. On peut également utiliser le dispositif extracteur signalé plus haut, qui permet d'extraire plusieurs cales simultanément.
La figure 1 illustre schématiquement une machine de service dans une salle d'électrolyse typique destinée à la production d'aluminium, vue en section.
La figure 2 illustre schématiquement la disposition des conducteurs de liaison entre deux cellules voisines.

Les figures 3a, 3b et 3c illustrent schématiquement un mode de réalisation particulier du dispositif d'extraction de cales selon l'invention. La figure 3a représente ledit dispositif extracteur lorsqu'il est mis en place sur les conducteurs, au niveau de la cale devant être extraite. La figure 3b représente ledit dispositif extracteur lorsque le moyen de préhension de la cale a été actionné. La figure 3c représente ledit dispositif extracteur lorsque la cale a été extraite et qu'il se trouve toujours en place, en appui sur les conducteurs, au niveau de la cale qui vient d'être extraite.

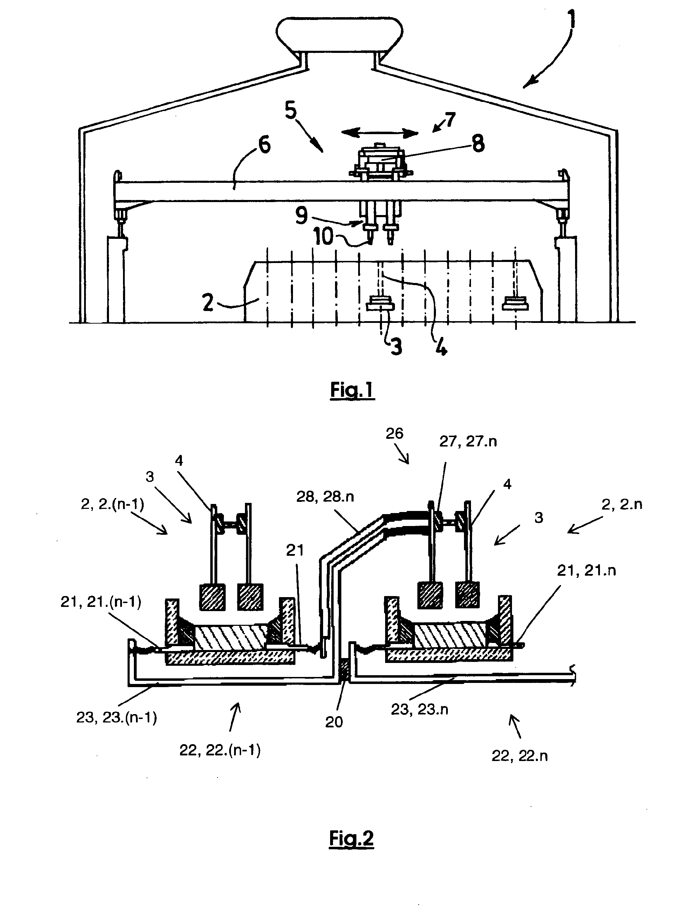

Les usines d'électrolyse destinées à la production d'aluminium comprennent une ou plusieurs salles d'électrolyse. La salle d'électrolyse (1) illustrée sur la figure 1 comporte des cellules d'électrolyse (2) et une machine de service (5). Les cellules d'électrolyse (2) sont normalement disposées en rangées ou files, chaque rangée ou file comportant typiquement plus d'une centaine de cellules. Les cellules (2) sont disposées de manière à dégager une allée de circulation le long de la salle d'électrolyse (1). Les cellules (2) comprennent une série d'anodes (3) munies d'une tige métallique (4) destinée à la fixation et au raccordement électrique des anodes à un cadre anodique métallique (27). Chaque cellule (2) comporte une cellule munie d'un ensemble cathodique (22) et d'un système anodique (26). La cellule comporte un caisson en acier, des éléments de revêtement en matériaux réfractaires. L'ensemble cathodique (22), situé au fond de la cellule, est formé par la juxtaposition de blocs carbonés dans lesquels sont scellées des barres métalliques dont les extrémités (21) sortent du caisson et sont reliées entre elles par un collecteur cathodique (23). Le circuit de connexion entre deux cellules successives (2.(n-1) et 2.n) comprend un circuit de transport du courant d'électrolyse où le collecteur cathodique (23.(n-1)) est relié d'une part aux sorties cathodiques (21.(n-1)) d'une cellule de rang donné (2.(n-1)) et, d'autre part, à des montées anodiques (28.n), elles-mêmes reliées aux cadres anodiques (27.n) de la cellule avale adjacente (2.n).

De temps en temps, une ou plusieurs cellules d'une série doivent être mises à l'arrêt. On effectue cet arrêt en connectant le collecteur cathodique (23.n) d'une cellule donnée (2.n) au conducteur de liaison qui relie le collecteur cathodique (23(n-1)) de la cellule amont adjacente (2.(n-1)) aux montées anodiques (28.n) qui alimentent le cadre anodique de ladite cellule. La connexion se fait par l'intermédiaire d'une pluralité de cales conductrices (20), typiquement en aluminium, insérées à force à différents endroits où les deux conducteurs présentent deux faces sensiblement verticales en vis-à-vis. Pour la mise en circuit de la cellule, il faut enlever l'ensemble des cales en un temps aussi bref que possible. Le dispositif selon l'invention permet d'enlever les cales une à une. Compact et léger, il peut être déplacé rapidement au droit de chaque cale et peut exercer un effort d'extraction important permettant de détacher chaque cale des conducteurs.

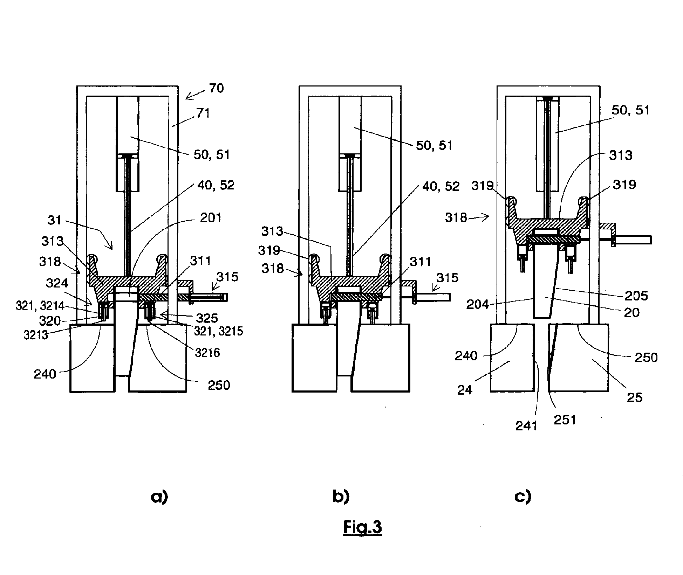

### EXEMPLE DE REALISATION (FIGURES 3a, 3b et 3c)

Le dispositif extracteur (30) illustré en figures 3a), 3b) et 3c) est destiné à extraire une cale de court-circuitage (20), qui a été insérée entre deux conducteurs (24 et 25) pour la mise hors circuit d'une cellule d'électrolyse. Le premier conducteur (24) est un conducteur de liaison entre la sortie cathodique (23.(n-1)) de la cellule directement en amont et la montée anodique (28.n) qui alimente le cadre anodique (27) de ladite cellule aval (2.n). Le deuxième conducteur (25) est une portion du collecteur cathodique (23.n) de ladite cellule aval (2.n). Chaque conducteur (24, 25) présente au moins une face horizontale supérieure (240, 250) et une face sensiblement verticale (241, 251). Les faces sensiblement verticales (241, 251) sont placées en vis-à-vis l'une de l'autre, délimitant ainsi un entrefer destiné à recevoir ladite cale de court-circuitage, elle-même comprenant deux faces sensiblement parallèles (204, 205), qui convergent faiblement vers le bas.

Le dispositif extracteur (30) comprend un moyen de préhension (31) de ladite cale et deux couples de vérins, chaque couple étant représenté par un vérin (respectivement 324 et 325) illustré sur les figures 3a) 3b) et 3c). Chaque vérin, orienté verticalement, comprend un corps (320) et un piston auquel est associée une tige (321) de piston. Le corps (320) de chaque vérin est solidaire du moyen de préhension (31). L'extrémité libre de la tige (3214, 3215) du piston de chaque vérin (324, 325) présente une face d'appui horizontale (3213, 3216) qui est orientée vers le bas et qui est disposée de telle sorte que, lorsque ledit dispositif extracteur est placé au dessus de ladite cale (20) pour l'extraire, ladite face d'appui horizontale (3213, 3216) se trouve au droit de la face horizontale supérieure (240, 250) du conducteur (24, 25) associé au couple de vérins auquel appartient ledit vérin.

Chacun de ces vérins est un vérin double effet alimenté par une centrale hydraulique fixée sur le bâti (70) du dispositif extracteur (30). Le circuit hydraulique comprend un groupe basse pression et un multiplicateur de pression branché sur le circuit alimentant la chambre côté piston. On peut de la sorte, avec une puissance embarquée faible, effectuer d'abord un rattrapage rapide des différences de niveaux, l'ensemble des vérins fonctionnant en basse pression et à haut débit tant que la face d'appui horizontale (3213, 3216) de la dernière tige n'est pas arrivée au contact de la face horizontale supérieure (240, 250) d'un conducteur (24, 25). Puis, lorsque les jeux sont rattrapés, un distributeur est actionné de telle sorte que la chambre côté piston est alimentée par de l'huile provenant du circuit traversant le multiplicateur de pression. L'extraction de la cale peut alors être effectuée, l'ensemble des vérins fonctionnant ensemble sous haute pression, à faible débit et exerçant, sur les conducteurs (24, 25) et sur la cale (20), des efforts opposés tendant à les écarter.

Pour faciliter son extraction, la cale (20) et ledit dispositif extracteur (30) sont munis de moyens de préhension coopérant entre eux. Le dispositif extracteur (30) comprend, comme moyen de préhension (31) de la cale, une pièce d'accrochage (313) globalement en forme de U renversé, les branches du U étant disposées de part et d'autre de la cale et munies d'alésages alignés destinés à être traversés par un axe de verrouillage (311) qui est disposé latéralement et qui se déplace dans le plan de symétrie commun des vérins des couples de vérins. La cale (20) présente, dans sa partie haute prévue pour rester au-dessus de l'entrefer des conducteurs, un alésage horizontal (201) traversant toute l'épaisseur de la cale. L'axe de verrouillage (311) est actionné par un vérin (315) qui introduit ledit axe de verrouillage à l'intérieur de l'alésage (201) de la cale et des alésages des branches du dispositif d'accrochage (313) en vue de la préhension de la cale (figure 3b)). La pièce d'accrochage (313) est fixée à l'extrémité basse d'un axe vertical (40) solidaire du bâti (70) du dispositif extracteur (30).

Le dispositif extracteur (30) comprend également un actionneur (50) destiné à relever l'ensemble comprenant la cale, le moyen de préhension de la cale et le ou les vérins, dès que la cale a été extraite, c'est-à-dire dès qu'elle n'est plus retenue par les conducteurs. Cet actionneur est un vérin pneumatique (51). Le moyen de préhension (31) de la cale est fixé à l'extrémité inférieure de l'axe (40), qui est lui-même un prolongement de la tige (52) de piston de l'actionneur (50). Lors de l'extraction, l'ensemble des vérins (324, 325) et l'actionneur (50) fonctionnent simultanément: l'effort d'extraction exercé sur la cale (20), fourni par les vérins (324, 325), substantiellement plus élevé que l'effort fourni par l'actionneur (50), n'est appliqué que jusqu'au moment où la cale se détache des conducteurs, moment à partir duquel les vérins fonctionnent à nouveau en régime basse pression - haut débit et où seul l'effort de soulèvement de l'actionneur (50) peut agir.

Le dispositif extracteur (30) comprend également un bâti (70) sur lequel est fixé ledit actionneur (50). Ledit bâti comprend des moyens d'accrochage, de façon à ce qu'il puisse être manutentionné par un moyen de transport et de levage. Il comprend également un carénage (71) qui délimite l'espace dans lequel l'ensemble comprenant la cale (20) et le moyen de préhension (31) de la cale doit évoluer après l'extraction de ladite cale et qui assure une protection des opérateurs agissant à proximité de l'extracteur vis-à-vis des pièces mobiles extraites.

Le dispositif extracteur est également muni d'un moyen de guidage (318) qui permet de guider selon une direction sensiblement verticale ledit moyen de préhension (31) de la cale au cours de la remontée de l'ensemble extrait (cale, moyen de préhension de la cale, vérin(s)). Ce moyen de guidage comprend un ensemble de galets (319) fixés sur la pièce d'accrochage (313) et destinés à rouler sur la paroi verticale du bâti (70).

Le bâti est également muni d'une boîte de refroidissement, qui est posée au dessus de la cale et qui est équipée en son sommet d'un dispositif de refroidissement agissant par effet venturi. L'effet venturi obtenu permet d'augmenter de façon significative (au moins un facteur 10) le débit d'air disponible et le débit d'air ainsi généré est orienté vers ladite cale.

## Revendications

1. Dispositif extracteur (30) destiné à extraire une cale (20) de court-circuitage, ladite cale ayant été insérée entre deux conducteurs (24 et 25) pour la mise hors circuit d'une cellule (2) d'électrolyse, chaque conducteur (24, 25) présentant au moins une face horizontale supérieure (240, 250) et une face sensiblement verticale (241, 251), la face sensiblement verticale d'un conducteur étant placée en vis-à-vis de celle de l'autre, les deux faces sensiblement verticales délimitant ainsi un entrefer destiné à recevoir ladite cale de court-circuitage, elle-même comprenant deux faces (204, 205) sensiblement parallèles, qui convergent faiblement vers le bas lorsque ladite cale est placée en vue d'occuper ledit entrefer, ledit dispositif comprenant un moyen de préhension (31) de ladite cale étant **caractérisé en ce qu'**il comprend, associé à la face horizontale supérieure (240, 250) de chaque conducteur (24, 25), au moins un vérin (324, 325) orienté verticalement et comprenant un corps (320) et un piston associé à une tige (321) de piston,
a) ladite tige (ou ledit corps) étant solidaire d'au moins une face d'appui horizontale (3213, 3216) orientée vers le bas et disposée de telle sorte que, lorsque ledit dispositif extracteur est placé au dessus de ladite cale pour l'extraire, ladite face horizontale supérieure (240, 250) du conducteur (24, 25) se trouve au droit de ladite face d'appui horizontale (3213, 3216),
b) ledit corps (ou ladite tige) étant relié audit moyen de préhension (31) de ladite cale, de telle sorte que, lorsque ledit vérin est actionné pour effectuer l'extraction de la cale, ledit vérin exerce, sur lesdits conducteurs et sur ladite cale, des efforts opposés tendant à les écarter.

2. Dispositif extracteur (30) selon la revendication 1 **caractérisé en ce que** chaque vérin (324, 325) est un vérin hydraulique.

3. Dispositif extracteur (30) selon la revendication 2 **caractérisé en ce que** chaque vérin est un vérin double effet alimenté par un circuit hydraulique comprenant un groupe basse pression et un multiplicateur de pression branché sur le circuit alimentant la chambre côté piston, aménagé de telle sorte que l'ensemble des vérins fonctionnent d'abord en basse pression et à haut débit, tant que la face d'appui horizontale (3213, 3216) de la dernière tige n'est pas arrivée au contact de la face horizontale supérieure (240, 250) d'un conducteur (24, 25), puis, lorsque les différences de niveaux sont ainsi corrigées, en régime haute pression, à faible débit, de sorte que l'ensemble desdits vérins exercent, sur les conducteurs (24, 25) et sur la cale (20), des efforts opposés tendant à les écarter.

4. Dispositif extracteur (30) selon l'une quelconque des revendications 1 à 3 **caractérisé en ce que** ledit moyen de préhension de la cale (31) comprend une pièce d'accrochage (313) fixée à l'extrémité basse d'un axe vertical (40) solidaire du bâti (70) du dispositif extracteur (30) et en forme globale de U renversé, les branches du U étant disposées de part et d'autre de la cale et munies d'alésages alignés destinés à être traversés par un axe de verrouillage (311) qui est disposé latéralement et qui se déplace dans le plan de symétrie commun des vérins des couples de vérins.

5. Dispositif extracteur (30) selon la revendication 4, dans lequel la cale (20) présente, dans sa partie haute prévue pour rester au-dessus de l'entrefer des conducteurs, un alésage horizontal (201) traversant toute l'épaisseur de la cale, et dans lequel l'axe de verrouillage (311) est actionné par un vérin (315) solidaire de ladite pièce d'accrochage et qui introduit ledit axe de verrouillage à l'intérieur de l'alésage (201) de la cale et des alésages des branches dudit dispositif d'accrochage (313) en vue de la préhension de la cale.

6. Dispositif extracteur (30) selon l'une quelconque des revendications 1 à 5 **caractérisé en ce qu'**il comprend également un actionneur (50) destiné à relever, dès que la cale n'est plus retenue par les conducteurs, l'ensemble comprenant la cale (20), le moyen de préhension (31) de ladite cale et lesdits vérins (32) de façon à ce que ledit ensemble sorte à l'extérieur dudit entrefer compris entre lesdits conducteurs.

7. Dispositif extracteur (30) selon la revendication 6, **caractérisé en ce que** ledit actionneur (50) est un vérin pneumatique (51).

8. Dispositif extracteur (30) selon l'une quelconque des revendications 4 à 7 **caractérisé en ce que** ladite pièce d'accrochage (313) de la cale (20) est fixée à l'extrémité inférieure de l'axe (40), qui est lui-même un prolongement de la tige (52) de l'actionneur (50).

9. Dispositif extracteur (30) selon l'une quelconque des revendications 4 à 8, **caractérisé en ce que** lesdits vérins (324, 325) et ledit actionneur(50) fonctionnent simultanément lors de l'extraction de ladite cale (20).

10. Dispositif extracteur (30) selon l'une quelconque des revendications 1 à 9 **caractérisé en ce qu'**il comprend également un bâti (70) sur lequel est fixé ledit actionneur (50), ledit bâti comprenant des moyens d'accrochage, de façon à ce qu'il puisse être manutentionné par un moyen de transport et de levage.

11. Dispositif extracteur (30) selon la revendication 10, **caractérisé en ce que** ledit bâti est muni de moyens de centrage qui permettent de guider ledit dispositif extracteur au cours de sa descente verticale vers une position prédéfinie par rapport auxdits conducteurs, les faces d'appui étant placées au droit des faces horizontales supérieures desdits conducteurs.

12. Dispositif extracteur (30) selon la revendication 10 ou 11, **caractérisé en ce que** ledit bâti (70) comprend également un carénage (71) qui délimite l'espace dans lequel l'ensemble comprenant la cale (20) et le moyen de préhension de la cale (31) doit évoluer après l'extraction de ladite cale et qui assure une protection des opérateurs agissant à proximité dudit dispositif extracteur.

13. Dispositif extracteur (30) selon l'une quelconque des revendications 1 à 12 **caractérisé en ce qu'**il comprend un moyen de guidage (318) qui permet de guider selon une direction sensiblement verticale ledit moyen de préhension (31) de la cale au cours de la remontée de l'ensemble extrait (cale, moyen de préhension de la cale, vérin(s)).

14. Dispositif extracteur (30) selon la revendication 13 dans lequel ledit moyen de guidage comprend un ensemble de galets (319) fixés sur la pièce d'accrochage (313) et placés de telle sorte qu'il roulent sur la paroi verticale du bâti (70) lorsque ladite pièce d'accrochage se déplace par rapport audit bâti.

15. Dispositif extracteur (30) selon l'une quelconque des revendications 10 à 14, **caractérisé en ce qu'**il comprend, fixée audit bâti, une boîte de refroidissement posée au dessus de la cale et qui est équipée en son sommet d'un dispositif de refroidissement agissant par effet venturi.

16. Procédé d'extraction de cales de court-circuitage employé lors de l'opération de redémarrage d'une cellule (2.n) d'électrolyse mise temporairement hors service, consistant à enlever les cales (20) de court-circuitage qui ont été introduites entre deux conducteurs (24, 25) pour la mise hors circuit de ladite cellule d'électrolyse, le premier conducteur étant associé à l'ensemble cathodique (22.n) de ladite cellule (2.n) et le deuxième conducteur étant associé à l'ensemble cathodique (22.(n-1)) de la cellule amont adjacente, chaque conducteur (24, 25) présentant au moins une face horizontale supérieure (240, 250) et une face sensiblement verticale(241, 251), la face sensiblement verticale d'un conducteur étant placée en vis-à-vis de celle de l'autre, les deux faces sensiblement verticales délimitant ainsi un entrefer destiné à recevoir une cale (20) de court-circuitage, elle-même comprenant deux faces (204, 205) sensiblement parallèles, qui convergent faiblement vers le bas lorsque ladite cale est placée en vue d'occuper ledit entrefer, ledit procédé étant **caractérisé en ce que** l'on utilise le dispositif d'extraction (30) selon l'une quelconque des revendications 1 à 15.

## Patentansprüche

1. Extraktionsvorrichtung (30) zur Entfernung eines Keilstücks (20) zum Kurzschließen, wobei das Keilstück zur Abschaltung einer Elektrolysezelle (2) zwischen zwei Stromzuführungen (24 und 25) eingesetzt wurde, wobei jede Stromzuführung (24, 25) mindestens eine horizontale obere Fläche (240, 250) und eine im Wesentlichen vertikale Fläche (241, 251) aufweist, wobei die im Wesentlichen vertikale Fläche einer Stromzuführung der der anderen Stromzuführung gegenüberliegend angeordnet ist, wobei die beiden im Wesentlichen vertikalen Flächen so einen Luftspalt zur Aufnahme des Keilstücks zum Kurzschließen begrenzen, welches seinerseits zwei im Wesentlichen parallele Flächen (204, 205) aufweist, die geringfügig nach unten zusammenlaufen, wenn das Keilstück in den Luftspalt eintreten soll, wobei die Vorrichtung, die ein Mittel (31) zum Greifen des Keilstücks aufweist, **dadurch gekennzeichnet ist, dass** sie mindestens einen, der horizontalen oberen Fläche (240, 250) jeder Stromzuführung (24, 25) zugeordneten, vertikal ausgerichteten Zylinder (324, 325) mit einem Zylinderkörper (320) und einen einer Kolbenstange (321) zugeordneten Kolben umfasst,
a) wobei die Kolbenstange (oder der Zylinderkörper) fest mit mindestens einer nach unten gerichteten horizontalen Auflagefläche (3213, 3216) verbunden ist, welche so angeordnet ist, dass, wenn die Extraktionsvorrichtung zur Entfernung des Keilstücks über diesem platziert ist, die horizontale obere Fläche (240, 250) der Stromzuführung (24, 25) an der horizontalen Auflagefläche (3213, 3216) liegt,
b) wobei der Zylinderkörper (oder die Kolbenstange) mit dem Mittel (31) zum Greifen des Keilstücks so verbunden ist, dass bei Betätigung des Zylinders zum Entfernen des Keilstücks der Zylinder entgegengesetzte Kräfte auf die Stromzuführungen und auf das Keilstück ausübt, um sie voneinander wegzubewegen.

2. Extraktionsvorrichtung (30) nach Anspruch 1, **dadurch gekennzeichnet, dass** jeder Zylinder (324, 325) ein Hydraulikzylinder ist.

3. Extraktionsvorrichtung (30) nach Anspruch 2, **dadurch gekennzeichnet, dass** jeder Zylinder ein von einem Hydraulikkreis gespeister, doppelt wirkender Zylinder ist, der eine Niederdruckgruppe und einen mit dem Hydraulikkreis, welcher die kolbenseitige Kammer speist, verbundenen Druckverstärker umfasst, der so ausgestaltet ist, dass alle Zylinder zunächst mit niedrigem Druck und hoher Leistung arbeiten, solange die horizontale Auflagefläche (3213, 3216) der letzten Kolbenstange nicht mit der horizontalen oberen Fläche (240, 250) einer Stromzuführung (24, 25) in Berührung gekommen ist, und nach Korrektur der Niveauunterschiede mit hohem Druck und niedriger Leistung arbeiten, so dass alle Zylinder auf die Leiter (24, 25) und auf das Keilstück (20) entgegengesetzte Kräfte ausüben, um sie voneinander wegzubewegen.

4. Extraktionsvorrichtung (30) nach irgendeinem der Ansprüche 1 bis 3, **dadurch gekennzeichnet, dass** das Mittel (31) zum Greifen des Keilstücks ein Befestigungsteil (313) umfasst, welches am unteren Ende einer mit dem Gestell (70) der Extraktionsvorrichtung (30) fest verbundenen vertikalen Achse (40) angebracht ist und die allgemeine Form eines umgekehrten U aufweist, wobei die Schenkel des U beiderseits des Keilstücks angeordnet und mit fluchtenden Bohrungen zum Durchtritt eines Sperrbolzens (311) versehen sind, welcher seitlich angeordnet ist und sich in der gemeinsamen Symmetrieebene der Zylinder der Zylinderpaare bewegt.

5. Extraktionsvorrichtung (30) nach Anspruch 4, wobei das Keilstück (20) in seinem oberen Bereich, der über dem Luftspalt der Stromzuführungen bleiben soll, eine horizontale, die gesamte Dicke des Keilstücks durchsetzende Bohrung (201) aufweist, und wobei der Sperrbolzen (311) von einem mit dem Befestigungsteil fest verbundenen Zylinder (315) betätigt wird, welcher den Sperrbolzen in die Bohrung (201) des Keilstücks und in die Bohrungen der Schenkel der Befestigungsvorrichtung (313) zum Greifen des Keilstücks hineinführt.

6. Extraktionsvorrichtung (30) nach irgendeinem der Ansprüche 1 bis 5, **dadurch gekennzeichnet, dass** sie ferner ein Stellglied (50) umfasst, welches, sobald das Keilstück nicht mehr von den Stromzuführungen festgehalten wird, die Anordnung aus Keilstück (20), Mittel (31) zum Greifen des Keilstücks und Zylindern (32) anhebt, um sie aus dem Luftspalt zwischen den Stromzuführungen herauszuführen.

7. Extraktionsvorrichtung (30) nach Anspruch 6, **dadurch gekennzeichnet, dass** das Stellglied (50) ein Pneumatikzylinder (51) ist.

8. Extraktionsvorrichtung (30) nach irgendeinem der Ansprüche 4 bis 7, **dadurch gekennzeichnet, dass** das Befestigungsteil (313) für das Keilstück (20) am unteren Ende der Achse (40) angebracht ist, welche ihrerseits eine Verlängerung der Stange (52) des Stellglieds (50) ist.

9. Extraktionsvorrichtung (30) nach irgendeinem der Ansprüche 4 bis 8, **dadurch gekennzeichnet, dass** die Zylinder (324, 325) und das Stellglied (50) bei der Entfernung des Keilstücks (20) gleichzeitig arbeiten.

10. Extraktionsvorrichtung (30) nach irgendeinem der Ansprüche 1 bis 9, **dadurch gekennzeichnet, dass** sie ferner ein Gestell (70) umfasst, an dem das Stellglied (50) befestigt ist, wobei das Gestell Einhakmittel aufweist, damit es mit einem Förder- und Hebemittel bewegt werden kann.

11. Extraktionsvorrichtung (30) nach Anspruch 10, **dadurch gekennzeichnet, dass** das Gestell mit Zentriermitteln versehen ist, mit denen die Extraktionsvorrichtung bei ihrem vertikalen Absinken in eine vorbestimmte Position relativ zu den Stromzuführungen geführt werden kann, wobei die Auflageflächen an den horizontalen oberen Flächen der Stromzuführungen liegen.

12. Extraktionsvorrichtung (30) nach Anspruch 10 oder 11, **dadurch gekennzeichnet, dass** das Gestell (70) ferner eine Verkleidung (71) aufweist, die den Raum für die Bewegung der Anordnung aus Keilstück (20) und Mittel (31) zum Greifen des Keilstücks nach dem Entfernen der Keilstücks begrenzt und den Schutz des in der Nähe der Extraktionsvorrichtung arbeitenden Bedienungspersonals gewährleistet.

13. Extraktionsvorrichtung (30) nach irgendeinem der Ansprüche 1 bis 12, **dadurch gekennzeichnet, dass** sie ein Führungsmittel (318) umfasst, mit dem das Mittel (31) zum Greifen des Keilstücks beim Aufstieg der herausgeführten Anordnung (Keilstück, Mittel zum Greifen des Keilstücks, Zylinder) in im Wesentlichen vertikaler Richtung geführt wird.

14. Extraktionsvorrichtung (30) nach Anspruch 13, wobei das Führungsmittel einen Satz Rollen (319) umfasst, welche an dem Befestigungsteil (313) angebracht und so angeordnet sind, dass sie bei Bewegung des Befestigungsteils relativ zum Gestell (70) an der vertikalen Wand des Gestells abrollen.

15. Extraktionsvorrichtung (30) nach irgendeinem der Ansprüche 10 bis 14, **dadurch gekennzeichnet, dass** sie einen am Gestell befestigten, über dem Keilstück liegenden Kühlbehälter umfasst, der an seiner Oberseite eine Kühleinrichtung mit Venturi-Effekt aufweist.

16. Verfahren zur Entfernung von Keilstücken zum Kurzschließen, welches Verfahren beim Wiedereinschalten einer vorübergehend abgeschalteten Elektrolysezelle (2.n) verwendet wird und bei dem die zur Abschaltung der Elektrolysezelle zwischen zwei Stromzuführungen (24, 25) eingesetzten Keilstücke (20) zum Kurzschließen entfernt werden, wobei die erste Stromzuführung der Kathodenanordnung (22.n) der Zelle (2.n) zugeordnet ist und die zweite Stromzuführung der Kathodenanordnung (22.(n-1)) der vorgeschalteten Nachbarzelle zugeordnet ist, wobei jede Stromzuführung (24, 25) mindestens eine horizontale obere Fläche (240, 250) und eine im Wesentlichen vertikale Fläche (241, 251) aufweist, wobei die im Wesentlichen vertikale Fläche einer Stromzuführung der der anderen Stromzuführung gegenüberliegend angeordnet ist, wobei die beiden im Wesentlichen vertikalen Flächen so einen Luftspalt zur Aufnahme eines Keilstücks (20) zum Kurzschließen begrenzen, welches seinerseits zwei im Wesentlichen parallele Flächen (204, 205) aufweist, die geringfügig nach unten zusammenlaufen, wenn das Keilstück in den Luftspalt eintreten soll, wobei das Verfahren **dadurch gekennzeichnet ist, dass** eine Extraktionsvorrichtung (30) nach irgendeinem der Ansprüche 1 bis 15 verwendet wird.

## Claims

1. Extraction device (30) designed to extract a short-circuiting wedge (20), said wedge having been inserted between two conductors (24 and 25) to take an electrolytic cell (2) off line, each conductor (24, 25) having at least one upper horizontal face (240, 250) and one substantially vertical face (241, 251), the substantially vertical face of a conductor being placed opposite that of the other, the two substantially vertical faces thereby delimiting an air-gap designed to receive said short-circuiting wedge, itself comprising two substantially parallel faces (204, 205), which converge slightly to the bottom when said wedge is placed so as to occupy said air-gap, said device including a means of gripping (31) said wedge and **characterized in that** it includes, in conjunction with the upper horizontal face (240, 250) of each conductor (24, 25), at least one jack (324, 325) directed vertically and comprising a body (320) and a piston associated with a piston stem (321),
a) said stem (or said body) being interdependent with at least one horizontal support face (3213, 3216) directed downwards and laid out so that, when said extraction device is placed above said wedge to extract it, said upper horizontal face (240, 250) of the conductor (24, 25) is in line with said horizontal support face (3213, 3216),
b) said body (or said stem) being connected to said means of gripping (31) said wedge, so that, when said jack is actuated to extract the wedge, said jack exerts opposing forces on said conductors and said wedge, tending to separate them.

2. Extraction device (30) according to claim 1 **characterized in that** each jack (324, 325) is a hydraulic actuating cylinder.

3. Extraction device (30) according to claim 2 **characterized in that** each jack is a double-acting jack powered by a hydraulic circuit including a low-pressure unit and a pressure intensifier connected to the circuit feeding the chamber on the piston side, arranged so that all the jacks initially operate at low pressure and with high flow rate, as long as the horizontal support face (3213, 3216) of the last stem has not come into contact with the upper horizontal face (240, 250) of a conductor (24, 25), then, when the differences in levels have been so corrected, in high-pressure mode, with low flow rate, so that all of said jacks exert opposing forces on conductors (24, 25) and on wedge (20), tending to separate them.

4. Extraction device (30) according to any of claims 1 to 3 **characterized in that** said means of gripping the wedge (31) includes a fixing part (313) fixed to the bottom end of a vertical axle (40) interdependent with frame (70) of extraction device (30) and globally in the shape of an upside-down U, the legs of the U being placed on either side of the wedge and being provided with aligned bores designed for a locking axle (311) to pass through them, this axle being laid out laterally and moving in the common plane of symmetry of the jacks in the pairs of jacks.

5. Extraction device (30) according to claim 4, in which the top part of wedge (20), designed to remain above the air-gap of the conductors, has a horizontal bore (201) passing through the entire thickness of the wedge, and in which the locking axle (311) is actuated by a jack (315) interdependent with said fixing part and which inserts said locking axle inside the bore (201) of the wedge and the bores of the legs of said fixing device (313) for gripping the wedge.

6. Extraction device (30) according to any of claims 1 to 5 **characterized in that** it also includes an actuator (50) designed to raise, as soon as the wedge is no longer held by the conductors, the unit including the wedge (20), the means of gripping (31) said wedge and said jacks (32) so that said unit comes out of said air-gap between said conductors.

7. Extraction device (30) according to claim 6, **characterized in that** said actuator (50) is a pneumatic jack (51).

8. Extraction device (30) according to any of claims 4 to 7 **characterized in that** said fixing part (313) of the wedge (20) is fixed at the lower end of the axle (40), which is itself an extension of the stem (52) of the actuator (50).

9. Extraction device (30) according to any of claims 4 to 8, **characterized in that** said jacks (324, 325) and said actuator (50) operate simultaneously during the extraction of said wedge (20).

10. Extraction device (30) according to any of claims 1 to 9 **characterized in that** it also includes a frame (70) onto which is fixed said actuator (50), said frame including means of fixing, so that it can be handled by transport and lifting means.

11. Extraction device (30) according to claim 10, **characterized in that** said frame is provided with means of centering which make it possible to guide said extraction device during its vertical move downwards towards a predefined position in relation to said conductors, the support faces being placed in line with the upper horizontal faces of said conductors.

12. Extraction device (30) according to claim 10 or 11, **characterized in that** said frame (70) also includes fairing (71) which delimits the space in which the unit including the wedge (20) and the means of gripping the wedge (31) must move after said wedge has been extracted and which provides protection for the operators working near said extractor.

13. Extraction device (30) according to any of claims 1 to 12 **characterized in that** it includes a means of guidance (318) which makes it possible to guide said means of gripping (31) the wedge in a substantially vertical direction as the extracted unit (wedge, means of gripping the wedge, jack(s)) rises.

14. Extraction device (30) according to claim 13 in which said means of guidance includes a set of rollers (319) fixed onto the fixing part (313) and placed so that they run on the vertical wall of frame (70) when said fixing part moves in relation to said frame.

15. Extraction device (30) according to any of claims 10 to 14, **characterized in that** it includes, fixed to said frame, a cooling box, which is placed above the wedge and the top of which is equipped with a cooler operating by Venturi effect.

16. Extraction process for short-circuiting wedges used when restarting an electrolytic cell (2.n) temporarily taken out of service, consisting in removing the short-circuiting wedges (20) which were inserted between two conductors (24, 25) to take said electrolytic cell off line, the first conductor being associated with the cathode assembly (22.n) of said cell (2.n) and the second conductor being associated with the cathode assembly (22.(n-1)) of the adjacent upstream cell, each conductor (24, 25) having at least one upper horizontal face (240, 250) and a substantially vertical face (241, 251), the substantially vertical face of a conductor being placed opposite that of the other, the two substantially vertical faces therefore delimiting an air-gap designed to receive said short-circuiting wedge (20), itself including two substantially parallel faces (204, 205), which converge slightly towards the bottom when said wedge is placed so as to occupy said air-gap, said process being **characterized in that** the extraction device (30) according to any of claims 1 to 15 is used.
